# EUROPÄISCHE PATENTANMELDUNG

(11) **EP 4 471 915 A2**
(43) Veröffentlichungstag der Anmeldung: **04.12.2024**
(21) Anmeldenummer: 24172314.7
(22) Anmeldetag: 25.04.2024
(51) Int. Cl.: H01M 8/04089

(54) **BRENNSTOFFZELLENSYSTEM UND VERFAHREN ZUM BETREIBEN EINES BRENNSTOFFZELLENSYSTEMS**

(30) Priorität: 30.05.2023 DE 102023114075
(71) Anmelder: Purem GmbH, 66539 Neunkirchen (DE)
(72) Erfinder: Gaiser, Gerd, Reutlingen (DE)
(74) Vertreter: Ruttensperger Lachnit Trossin Gomoll

(57) **Zusammenfassung**

Ein Brennstoffzellensystem, insbesondere für ein Fahrzeug, umfasst wenigstens eine Brennstoffzelle (12), einen an einem Anoden-Einlassbereich (18) der wenigstens einen Brennstoffzelle (12) mit Wasserstoff (H₂) zu speisenden Anodenbereich (14), einen an einem Kathoden-Einlassbereich (20) der wenigstens einen Brennstoffzelle (12) mit Sauerstoff (O₂) zu speisenden Kathodenbereich (16), eine an einem Anoden-Auslassbereich (30) der wenigstens einen Brennstoffzelle (12) Anodenabgas (A) aufnehmende Anoden-Auslassleitung (32), wenigstens eine von dem Anodenabgas (A) durchströmbare Katalysatoreinheit (34) in der Anoden-Auslassleitung (32), eine an einem Kathoden-Auslassbereich (26) der wenigstens einen Brennstoffzelle (12) Kathodenabgas (K) aufnehmende Kathoden-Auslassleitung (28) sowie eine die Kathoden-Auslassleitung (28) mit der Anoden-Auslassleitung (32) stromaufwärts wenigstens einer Katalysatoreinheit (34) verbindende Kathoden-Abzweigleitung (38).

## Beschreibung

Die vorliegende Erfindung betrifft ein Brennstoffzellensystem, welches beispielsweise in einem elektrisch betriebenen Fahrzeug dazu genutzt werden kann, die zum Betreiben des Fahrzeugs erforderliche elektrische Energie zu generieren.

Bei derartigen eine oder mehrere beispielsweise als PEM-Brennstoffzellen ausgebildete Brennstoffzellen aufweisenden Brennstoffzellensystemen werden zum Teil am Beginn des Brennstoffzellenbetriebs, zum Teil auch während des Brennstoffzellenbetriebs so genannte Purge-Vorgänge durchgeführt. Bei diesen Purge-Vorgänge wird der Anodenbereich einer Brennstoffzelle mit an einem Anoden-Einlassbereich in diesen eingeleitetem und an einem Anoden-Auslassbereich aus diesem wieder abgegebenen Wasserstoff gespült, so dass im Anodenbereich sich ansammelnde Luft bzw. Stickstoff aus diesem ausgetragen werden, um dadurch für einen effizienten Brennstoffzellenbetrieb bei nicht beeinträchtigter Wasserstoffkonzentration im Anodenbereich zu sorgen.

Der bei einem derartigen Purge-Vorgang aus dem Anodenbereich mit dem Anodenabgas abgegebene Wasserstoff ist ein grundsätzlich umweltschädliches Gas, und das Abgeben des Wasserstoffs zur Umgebung kann zu einer hinsichtlich einer Explosionsgefahr potenziell kritischen Situation führen.

Es ist die Aufgabe der vorliegenden Erfindung, bei einfacher und kompakter baulicher Ausgestaltung eines Brennstoffzellensystems zuverlässig die Menge von zur Umgebung abgegebenem Wasserstoff zu minimieren.

Gemäß einem ersten Aspekt der vorliegenden Erfindung wird diese Aufgabe gelöst durch ein Brennstoffzellensystem, insbesondere für ein Fahrzeug, umfassend:
- wenigstens eine Brennstoffzelle,
- einen an einem Anoden-Einlassbereich der wenigstens einen Brennstoffzelle mit Wasserstoff zu speisenden Anodenbereich,
- einen an einem Kathoden-Einlassbereich der wenigstens einen Brennstoffzelle mit Sauerstoff zu speisenden Kathodenbereich,
- eine an einem Anoden-Auslassbereich der wenigstens einen Brennstoffzelle Anodenabgas aufnehmende Anoden-Auslassleitung,
- wenigstens eine von dem Anodenabgas durchströmbare Katalysatoreinheit in der Anoden-Auslassleitung,
- eine an einem Kathoden-Auslassbereich der wenigstens einen Brennstoffzelle Kathodenabgas aufnehmende Kathoden-Auslassleitung,
- eine die Kathoden-Auslassleitung mit der Anoden-Auslassleitung stromaufwärts wenigstens einer Katalysatoreinheit verbindende Kathoden-Abzweigleitung.

Einen wesentlichen Beitrag zur Reduzierung des zur Umgebung abgegebenen Wasserstoffs liefert die wenigstens eine Katalysatoreinheit, an welcher der insbesondere bei Durchführung von Purge-Vorgängen am Anoden-Auslassbereich abgegebene Wasserstoff in einer katalytischen Reaktion mit Sauerstoff zu Wasser umgesetzt wird. Der für diese katalytische Umsetzung erforderliche Sauerstoff wird dadurch bereitgestellt, dass ein Teil des am Kathoden-Auslassbereich abgegebenen und Sauerstoff bzw. Restsauerstoff enthaltenden Kathodenabgases abgezweigt und zusammen mit dem Anodenabgas in die wenigstens eine Katalysatoreinheit bzw., sofern mehrere derartige Katalysatoreinheiten vorgesehen sind, in wenigstens eine der Katalysatoreinheiten eingeleitet wird.

Da bei dem erfindungsgemäß aufgebauten Brennstoffzellensystem nicht der gesamte Strom des Kathodenabgases mit dem Anodenabgas durchmischt wird, kann das Entstehen einer sehr geringen Wasserstoffkonzentration im Bereich der wenigstens einen Katalysatoreinheit vermieden werden. Dies vermeidet die Notwendigkeit, die Katalysatoreinheit mit einem großen Katalysatorvolumen bzw. einer großen Katalysatoroberfläche bereitstellen zu müssen, wodurch einerseits die Baugröße und andererseits die Baukosten klein gehalten werden können. Andererseits wird ein zu einem relativ hohen Druckverlust führender übermäßig großer Massenstrom durch die wenigstens eine Katalysatoreinheit hindurch vermieden.

Um den Strom des Kathodenabgases aufzuteilen, kann der Kathoden-Abzweigleitung eine Strömungsleitanordnung zugeordnet sein zum Leiten eines Teils des in die Kathoden-Auslassleitung eingeleiteten Kathodenabgases in die Kathoden-Abzweigleitung.

Um in Anpassung an verschiedene Betriebszustände bzw. in verschiedenen Betriebsphasen durchzuführende Purge-Vorgänge eine für die katalytische Umsetzung geeignete Vermischung von Wasserstoff und im Kathodenabgas enthaltenem Sauerstoff erreichen zu können, kann der Anteil des in die Kathoden-Abzweigleitung eingeleiteten Kathodenabgases durch die Strömungsleitanordnung veränderbar sein.

Bei einer besonders vorteilhaften Ausgestaltung kann in der Kathoden-Auslassleitung stromaufwärts einer Abzweigung der Kathoden-Abzweigleitung von der Kathoden-Auslassleitung eine Kathodenabgas-Entfeuchtungsanordnung angeordnet sein oder/und kann in der Kathodenabgas-Abzweigleitung eine Kathodenabgas-Entfeuchtungsanordnung angeordnet sein. Durch den Einsatz einer derartigen beispielsweise als Kondensatoreinheit bzw. Wasserabscheider ausgebildeten Entfeuchtungsanordnung wird dem mit dem Anodenabgas zu mischenden Teil des Kathodenabgases Feuchtigkeit entzogen, was sich einerseits auf das Umsetzverhalten der Katalysatoreinheit bei Durchführung der katalytischen Reaktion vorteilhaft auswirkt und andererseits ein übermäßig schnelles Altern insbesondere des katalytisch wirksamen Materials verhindert.

Bei dem erfindungsgemäß aufgebauten Brennstoffzellensystem kann eine Brennstoffzellen-Abgasanlage vorgesehen sein zur Aufnahme des nicht aus der Kathoden-Auslassleitung abgezweigten Teils des Kathodenabgases und des aus der wenigstens einen Katalysatoreinheit nach Durchführung der katalytischen Reaktion abgegebenen Gemisches des Anodenabgases mit dem aus der Kathoden-Auslassleitung abgezweigten Teil des Kathodenabgases.

Beispielsweise kann die Brennstoffzellen-Abgasanlage eine Entfeuchtungsanordnung umfassen, um dem Brennstoffzellenabgas vor Abgabe zur Umgebung weitere Feuchtigkeit bzw. Wasser zu entziehen. Alternativ oder zusätzlich kann die Brennstoffzellen-Abgasanlage einen Schalldämpfer umfassen, um die Abgabe von Geräuschen, die beispielsweise im Bereich eines Luft in den Kathodenbereich fördernden Kompressors entstehen können, zur Umgebung zu unterdrücken.

Gemäß einem weiteren Aspekt der vorliegenden Erfindung wird die Aufgabe gelöst durch ein Verfahren zum Betreiben eines Brennstoffzellensystems, insbesondere eines erfindungsgemäß aufgebauten Brennstoffzellensystems, wobei an einem Anoden-Auslassbereich einer Brennstoffzelle abgegebenes Anodenabgas zum Verringern des Wasserstoffgehalts in dem Anodenabgas durch wenigstens eine Katalysatoreinheit geleitet wird und ein Teil von an einem Kathoden-Auslassbereich einer Brennstoffzelle abgegebenem Kathodenabgas dem Anodenabgas stromaufwärts wenigstens einer Katalysatoreinheit beigemischt wird.

Zur Anpassung an verschiedene Betriebszustände kann der dem Anodenabgas beigemischte Teil des Kathodenabgases variabel sein.

Insbesondere kann dabei vorgesehen sein, dass die Menge des dem Anodenabgas beigemischten Kathodenabgases in Abhängigkeit von dem Wasserstoffgehalt in dem am Anoden-Auslassbereich abgegebenen Anodenabgases eingestellt wird.

Für eine effiziente katalytische Umsetzung bei möglichst klein gehaltenem Volumenstrom durch die wenigstens eine Katalysatoreinheit hindurch wird vorgeschlagen, dass die Menge des dem Anodenabgas beigemischten Kathodenabgases derart eingestellt wird, dass zur katalytischen Reaktion in der wenigstens einen Katalysatoreinheit ein wenigstens stöchiometrisches, vorzugsweise überstöchiometrisches, Sauerstoff/Wasserstoff-Verhältnis bereitgestellt wird. Insbesondere ein Betrieb der wenigsten seinen Katalysatoreinheit mit einem überstöchiometrischen Sauerstoff/Wasserstoff-Verhältnis stellt sicher, dass im Wesentlichen der gesamte im Anodenabgas enthaltene Wasserstoff zu Wasser umgesetzt werden kann.

Das Auftreten einer hinsichtlich des Auftretens einer Knallgasreaktion im Bereich der wenigstens einen Katalysatoreinheit kritischen Wasserstoffkonzentration in dem durch die wenigstens eine Katalysatoreinheit hindurch geleiteten Gemisch aus Anodenabgas und Kathodenabgas kann dadurch vermieden werden, die Menge des dem Anodenabgas beigemischten Kathodenabgases derart eingestellt wird, dass das der wenigstens einen Katalysatoreinheit zugeführte Gemisch aus Anodenabgas und Kathodenabgas einen unter einem Schwellen-Wasserstoffgehalt liegenden Wasserstoffgehalt aufweist.

Dabei ist es besonders vorteilhaft, wenn der Schwellen-Wasserstoffgehalt im Bereich von 4 Vol.% bis 8 Vol.% liegt und damit ein eine derartige Reaktion zulassendes Zündverhältnis nicht erreicht wird.

Zur weiteren Behandlung der verschiedenen Abgasströme kann der nicht dem Anodenabgas beigemischte Teil des Kathodenabgases und das die wenigstens eine Katalysatoreinheit nach Durchführung der katalytischen Reaktion verlassende Gemisch des Anodenabgases und des dem Anodenabgas beigemischten Teils des Kathodenabgases in eine Brennstoffzellen-Abgasanlage geleitet werden. In einer derartigen Brennstoffzellen-Abgasanlage kann dem diese durchströmenden Gasgemisch weitere Feuchtigkeit bzw. weiteres Wasser entzogen werden. Auch kann eine derartige Brennstoffzellen-Abgasanlage einen Schalldämpfer umfassen, um die Abgabe von Geräuschen, welche insbesondere im Bereich des Luft in den Kathodenbereich fördernden Kompressors entstehen können, nach außen zu unterdrücken.

Die vorliegende Erfindung wird nachfolgend mit Bezug auf die beiliegenden Figuren detailliert beschrieben. Es zeigt:
- Fig. 1: ein Brennstoffzellensystem in prinzipartiger Darstellung;
- Fig. 2: eine alternative Ausgestaltungsart des Brennstoffzellensystems;

- Fig. 3: eine weitere alternative Ausgestaltungsart des Brennstoffzellensystems.

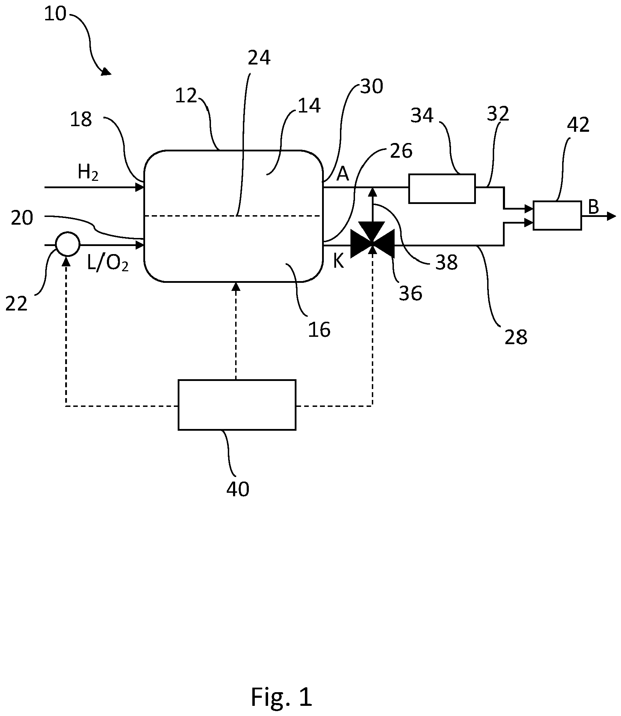

In Fig. 1 ist ein beispielsweise in einem Fahrzeug zur Erzeugung elektrischer Energie eingesetztes Brennstoffzellensystem allgemein mit 10 bezeichnet. Das Brennstoffzellensystem 10 umfasst als zentralen Bestandteil eine beispielsweise als PEM-Brennstoffzelle ausgebildete Brennstoffzelle 12 bzw. einen Brennstoffzellenstapel mit einem Anodenbereich 14 und einem Kathodenbereich 16. Dem Anodenbereich 14 wird an einem Anoden-Einlassbereich 18 gasförmiger Wasserstoff H₂ beispielsweise aus einem Kryo-Wasserstofftank zugeführt. An einem Kathoden-Einlassbereich 20 wird beispielsweise vermittels eines Kompressors 22 dem Kathodenbereich 16 Luft L und damit in der Luft enthaltener Sauerstoff O₂ zugeführt. Im Brennstoffzellenbetrieb der Brennstoffzelle 12 diffundieren Wasserstoffprotonen durch die Membran 24 der Brennstoffzelle 12 in den Kathodenbereich 16 und reagieren dort mit dem in diesen eingeleiteten Sauerstoff zu Wasser, das zusammen mit Restsauerstoff und in der dem Kathodenbereich 16 zugeführten Luft L enthaltenem Stickstoff an einem Kathoden-Auslassbereich 26 in eine Kathoden-Auslassleitung 28 abgegeben wird.

Um bei nicht aktivierter Brennstoffzelle 12 in dem Anodenbereich 14 sich ansammelnde Luft, also im Wesentlichen Sauerstoff und Stickstoff, aus dem Anodenbereich 14 zu entfernen bzw. während des Brennstoffzellenbetriebs durch Diffusion durch die Membran 24 hindurch sich in dem Anodenbereich 14 ansammelnden Stickstoff aus dem Anodenbereich 14 auszutragen, werden beispielsweise vor Inbetriebnahme der Brennstoffzelle 12 bzw. während des Brennstoffzellenbetriebs so genannte Purge-Vorgänge durchgeführt, in welchen ein Anoden-Auslassbereich 30 geöffnet wird und durch in den Anodenbereich 14 eingeleiteten Wasserstoff der Anodenbereich 14 gespült wird bzw. darin sich ansammelnder Stickstoff bzw. Sauerstoff aus dem Anodenbereich 14 über den Anodenauslassbereich 30 in eine Anoden-Auslassleitung 32 geleitet wird.

Das insbesondere bei derartigen Purge-Vorgängen in der Anoden-Auslassleitung 32 abgegebene Anodenabgas A enthält Wasserstoff, dessen Abgabe zur Umgebung grundsätzlich unerwünscht ist. Aus diesem Grunde ist in der Anoden-Auslassleitung 32 eine Katalysatoreinheit 34 angeordnet, in welcher in einer Katalytischen Reaktion der im Anodenabgas A enthaltene Wasserstoff mit Sauerstoff zu Wasserumgesetzt wird.

Um die für diese katalytische Reaktion erforderliche Sauerstoffmenge bereitstellen zu können, ist der Kathoden-Auslassleitung 28 eine als Ventil oder Strömungsklappe ausgebildete Strömungsleitanordnung 36 zugeordnet, welche in dem dargestellten Ausgestaltungsbeispiel in die Kathoden-Auslassleitung 28 integriert ist. Alternativ kann die der Kathoden-Auslassleitung 28 zugeordnete Strömungsleitanordnung 36 in eine von der Kathoden-Auslassleitung 28 abzweigende Kathoden-Abzweigleitung 38 integriert sein, die stromaufwärts der Katalysatoreinheit 34 in die Anoden-Auslassleitung 32 einmündet. Durch die Strömungsleitanordnung 36 kann ein Teil des am Kathodenbereich 16 abgegebenen Kathodenabgases K in eine Kathoden-Abzweigleitung 38 geleitet werden bzw. kann die Kathoden-Abzweigleitung 38 wahlweise geöffnet oder abgesperrt werden.

Zur definierten Einstellung der über die Kathoden-Abzweigleitung 38 in die Anoden-Auslassleitung 32 und damit auch der in die Katalysatoreinheit 34 geleiteten Menge des Kathodenabgases K steht die Strömungsleitanordnung 36 unter der Ansteuerung einer Ansteuereinheit 40, welche auch dazu genutzt werden kann, die Brennstoffzelle 12 an sich bzw. den Kompressor 22 anzusteuern.

Soll ein Purge-Vorgang durchgeführt werden, kann bei beispielsweise unverändertem Betrieb des Kompressors 22 und damit unveränderter Menge der in den Kathodenbereich 16 eingeleiteten Luft L ein nicht dargestelltes und dem Anoden-Auslassbereich 30 zugeordnetes Ventil angesteuert werden, um dieses zu öffnen und das Anodenabgas A in die Anoden-Auslassleitung 32 strömen zu lassen. Da durch das Öffnen des Anoden-Auslassbereichs 30 der Druck im Anodenbereich 14 absinkt, kann zum Beibehalten gleichmäßiger Druckverhältnisse die Förderleistung des Kompressors 22 während eines derartigen Purge-Vorgangs abgesenkt werden. Zeitlich abgestimmt auf das Einleiten des Wasserstoff enthaltenden Anodenabgases A in die Anoden-Auslassleitung 32 kann die Strömungsleitanordnung 36 so angesteuert werden, dass eine geeignete Menge des Kathodenabgases K aus der Kathoden-Auslassleitung 28 abgezweigt und in die Anoden-Auslassleitung 32 eingeleitet wird. Um zu gewährleisten, dass zu keinem Zeitpunkt eine zu geringe Menge an Sauerstoff für die Durchführung der katalytischen Reaktion in der Katalysatoreinheit 34 vorhanden ist, kann beispielsweise vorgesehen sein, dass durch die Strömungsleitanordnung 36 bereits vor dem Leiten von Wasserstoff enthaltendem Anodenabgas A in die Anoden-Auslassleitung 32 ein Teil des Kathodenabgases K über die Kathoden-Abzweigleitung 38 in die Anoden-Auslassleitung 32 und somit in die Katalysatoreinheit 34 eingespeist wird. Mit im Purge-Vorgang dann zunehmender Menge des aus dem Anodenbereich 14 abgegebenen Wasserstoffs stellt sich in der Katalysatoreinheit ein Sauerstoff/Wasserstoff-Gemisch ein, welches für eine vollständige Umsetzung des Wasserstoffs geeignet ist. Da im Allgemeinen auch bekannt ist, wie groß die Menge bzw. die Konzentration des Wasserstoffs im Anodenabgas A ist, kann durch entsprechende Ansteuerung der Strömungsleitanordnung 36 auch dafür gesorgt werden, dass die für die Einstellung eines definierten Verhältnisses von Wasserstoff zu Sauerstoff geeignete Menge an Kathodenabgas K aus der Kathoden-Auslassleitung 28 abgezweigt wird.

Bei der Durchführung der katalytischen Reaktion in der Katalysatoreinheit 34 ist es einerseits von Bedeutung, dass im Wesentlichen kein nicht mit Sauerstoff zu Wasser umgesetzter Wasserstoff die Katalysatoreinheit 34 verlässt. Dies bedeutet, dass das Sauerstoff/Wasserstoff-Verhältnis zumindest stöchiometrisch sein muss. Um das Austreten von nicht umgesetztem Wasserstoff zuverlässig zu verhindern, ist vorzugsweise das Sauerstoff/Wasserstoff-Verhältnis überstöchiometrisch, so dass die Umsetzung unter Sauerstoffüberschuss ablaufen kann.

Weiter muss berücksichtigt werden, dass in dem Gemisch aus Anodenabgas A und Kathodenabgas K, welches der Katalysatoreinheit 34 zugeführt wird, der Volumenprozentanteil des Wasserstoffs so gering ist, dass ein die Gefahr einer Knallgasexplosion mit sich bringendes Zündverhältnis nicht erreicht wird. Aus diesem Grund ist es vorteilhaft, wenn die vom Kathodenabgas K abgezweigte Menge des Kathodenabgases K so eingestellt wird, dass unter Berücksichtigung des bei einem Purge-Vorgang zu erwartenden Wasserstoffgehalts im Anodenabgas A in dem dann erzeugten Gemisch aus Anodenabgas A und Kathodenabgas K der Wasserstoffgehalt einen Schwellen-Wasserstoffgehalt im Bereich von 4 Vol.% bis 8 Vol.% nicht übersteigt. Dabei kann insbesondere die dem Anodenabgas A beigemengte Menge des Kathodenabgases K so bestimmt werden, dass die infolge der Reaktionswärme bei ablaufender katalytischen Reaktion in der Katalysatoreinheit entstehende Temperatur in einem diese Reaktion unterstützenden optimalen Bereich liegt.

Das die Katalysatoreinheit 34 verlassende und idealerweise nahezu keinen Wasserstoff, dafür aber Wasser enthaltende Anodenabgas A kann zusammen mit dem nicht aus der Kathoden-Auslassleitung 28 abgezweigten Anteil des Kathodenabgases K einer Brennstoffzellen-Abgasanlage 42 zugeführt werden, in welcher beispielsweise dem diese durchströmenden Gemisch aus Anodenabgas A und Kathodenabgas K weiteres Wasser entzogen werden kann. Auch kann die Brennstoffzellen-Abgasanlage 42 einen oder mehrere Schalldämpfer enthalten, über welche dann das Brennstoffzellenabgas B im Wesentlichen frei von Wasserstoff und mit nur einem vergleichsweise geringen Wassergehalt zur Umgebung ausgestoßen werden kann.

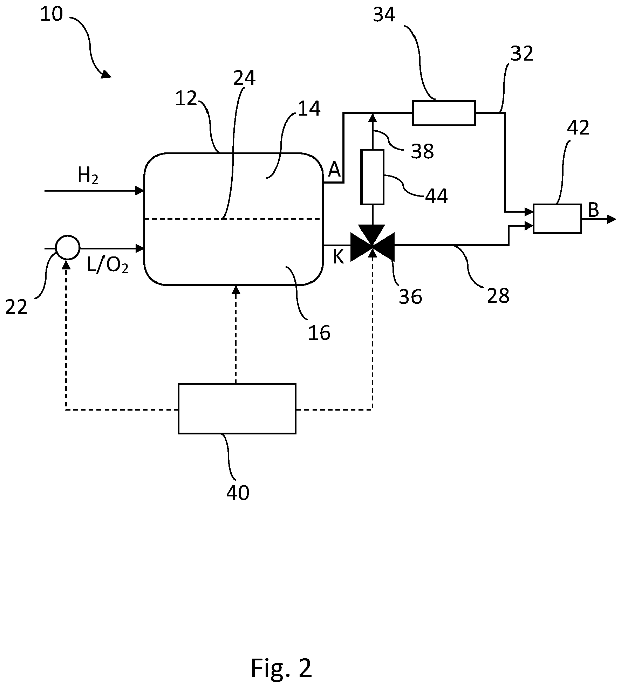

Eine alternative Ausgestaltungsform des Brennstoffzellensystems 10 ist in Fig. 2 gezeigt. Bei dieser Ausgestaltungsart des Brennstoffzellensystems 10 ist in der Kathoden-Abzweigleitung 38 stromabwärts der Strömungsleitanordnung 36 eine Kathodenabgas-Entfeuchtungsanordnung 44 vorgesehen. Diese kann beispielsweise einen Kondensator bzw. einen Wasserabscheider umfassen, um zumindest einen Teil des im Kathodenabgas K transportierten Wassers abzuziehen. Dies führt dazu, dass der Wassergehalt bzw. die relative Feuchte des der Katalysatoreinheit 34 zugeführten Gemisches aus Anodenabgas A und Kathodenabgas K verringert ist, was die Effizienz der Katalysatoreinheit 34 erhöht und ein übermäßig starkes Altern derselben verhindert.

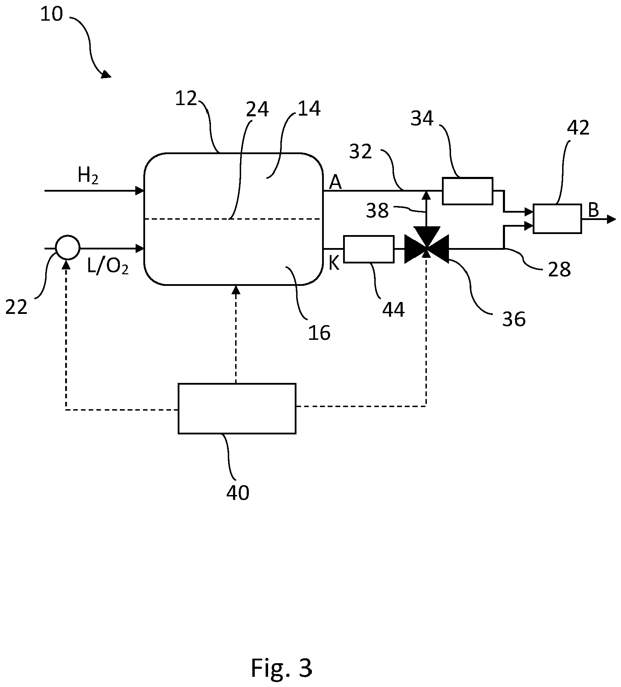

Bei einer in Fig. 3 dargestellten weiteren alternativen Ausgestaltungsart des Brennstoffzellensystems ist die Kathodenabgas-Entfeuchtungsanordnung 44 stromaufwärts der Strömungsleitanordnung 36 in der Kathoden-Auslassleitung 28 angeordnet.

Mit dem erfindungsgemäßen Brennstoffzellensystem ist bei konstruktiv einfacher Ausgestaltung zuverlässig dafür gesorgt, dass insbesondere während Purge-Vorgängen aus dem Anodenbereich einer bzw. mehrerer Brennstoffzellen ausgestoßener Wasserstoff zuverlässig in einer katalytischen Reaktion mit Sauerstoff zu Wasser umgesetzt werden kann. Da das Anodenabgas nur mit einem Teil des Kathodenabgases durchmischt wird, ist der die Katalysatoreinheit durchsetzende Volumenstrom vergleichsweise klein, was auch zu einem kleineren und somit preisgünstigeren Aufbau der Katalysatoreinheit beiträgt. Da überdies eine ausreichend hohe Konzentration von Wasserstoff für die Katalytische Umsetzung bereitgestellt werden kann, führt dies zu einer größeren adiabaten Temperaturerhöhung und somit einer höheren Reaktionsgeschwindigkeit, wodurch die Effizienz der Katalysatoreinheit gesteigert werden kann.

## Patentansprüche

1. Brennstoffzellensystem, insbesondere für ein Fahrzeug, umfassend:
- wenigstens eine Brennstoffzelle (12),
- einen an einem Anoden-Einlassbereich (18) der wenigstens einen Brennstoffzelle (12) mit Wasserstoff (H₂) zu speisenden Anodenbereich (14),
- einen an einem Kathoden-Einlassbereich (20) der wenigstens einen Brennstoffzelle (12) mit Sauerstoff (O₂) zu speisenden Kathodenbereich (16),
- eine an einem Anoden-Auslassbereich (30) der wenigstens einen Brennstoffzelle (12) Anodenabgas (A) aufnehmende Anoden-Auslassleitung (32),
- wenigstens eine von dem Anodenabgas (A) durchströmbare Katalysatoreinheit (34) in der Anoden-Auslassleitung (32),
- eine an einem Kathoden-Auslassbereich (26) der wenigstens einen Brennstoffzelle (12) Kathodenabgas (K) aufnehmende Kathoden-Auslassleitung (28),
- eine die Kathoden-Auslassleitung (28) mit der Anoden-Auslassleitung (32) stromaufwärts wenigstens einer Katalysatoreinheit (34) verbindende Kathoden-Abzweigleitung (38).

2. Brennstoffzellensystem nach Anspruch 1, **dadurch gekennzeichnet, dass** der Kathoden-Abzweigleitung (38) eine Strömungsleitanordnung (36) zugeordnet ist zum Leiten eines Teils des in die Kathoden-Auslassleitung (28) eingeleiteten Kathodenabgases (K) in die Kathoden-Abzweigleitung (38).

3. Brennstoffzellensystem nach Anspruch 2, **dadurch gekennzeichnet, dass** der Anteil des in die Kathoden-Abzweigleitung (38) eingeleiteten Kathodenabgases (K) durch die Strömungsleitanordnung (36) veränderbar ist.

4. Brennstoffzellensystem nach einem der Ansprüche 1-3, **dadurch gekennzeichnet, dass** in der Kathoden-Auslassleitung (28) stromaufwärts einer Abzweigung der Kathoden-Abzweigleitung (38) von der Kathoden-Auslassleitung (28) eine Kathodenabgas-Entfeuchtungsanordnung (44) angeordnet ist, oder/und dass in der Kathodenabgas-Abzweigleitung (38) eine Kathodenabgas-Entfeuchtungsanordnung (44) angeordnet ist.

5. Brennstoffzellensystem nach einem der Ansprüche 1-4, **dadurch gekennzeichnet, dass** eine Brennstoffzellen-Abgasanlage (42) vorgesehen ist zur Aufnahme des nicht aus der Kathoden-Auslassleitung (28) abgezweigten Teils des Kathodenabgases (K) und des aus der wenigstens einen Katalysatoreinheit (34) nach Durchführung der katalytischen Reaktion abgegebenen Gemisches des Anodenabgases (A) mit dem aus der Kathoden-Auslassleitung (28) abgezweigten Teil des Kathodenabgases (K).

6. Brennstoffzellensystem nach Anspruch 5, **dadurch gekennzeichnet, dass** die Brennstoffzellen-Abgasanlage (42) eine Entfeuchtungsanordnung oder/und einen Schalldämpfer umfasst.

7. Verfahren zum Betreiben eines Brennstoffzellensystems, insbesondere eines Brennstoffzellensystems nach Anspruch 1, wobei an einem Anoden-Auslassbereich (30) einer Brennstoffzelle (12) abgegebenes Anodenabgas (A) zum Verringern des Wasserstoffgehalts in dem Anodenabgas (A) durch wenigstens eine Katalysatoreinheit (34) geleitet wird und ein Teil von an einem Kathoden-Auslassbereich (36) der Brennstoffzelle (12) abgegebenem Kathodenabgas (K) dem Anodenabgas (A) stromaufwärts wenigstens einer Katalysatoreinheit (34) beigemischt wird.

8. Verfahren nach Anspruch 7, **dadurch gekennzeichnet, dass** der dem Anodenabgas (A) beigemischte Teil des Kathodenabgases (K) variabel ist.

9. Verfahren nach Anspruch 8, **dadurch gekennzeichnet, dass** die Menge des dem Anodenabgas (A) beigemischten Kathodenabgases (K) in Abhängigkeit von dem Wasserstoffgehalt in dem am Anoden-Auslassbereich (30) abgegebenen Anodenabgas (A) eingestellt wird.

10. Verfahren nach Anspruch 8 oder 9, dass die Menge des dem Anodenabgas (A) beigemischten Kathodenabgases (K) derart eingestellt wird, dass zur katalytischen Reaktion in der wenigstens einen Katalysatoreinheit (34) ein wenigstens stöchiometrisches, vorzugsweise überstöchiometrisches, Sauerstoff/Wasserstoff-Verhältnis bereitgestellt wird.

11. Verfahren nach Anspruch 10, **dadurch gekennzeichnet**, die Menge des dem Anodenabgas (A) beigemischten Kathodenabgases (K) derart eingestellt wird, dass das der wenigstens einen Katalysatoreinheit (34) zugeführte Gemisch aus Anodenabgas (A) und Kathodenabgas (K) einen unter einem Schwellen-Wasserstoffgehalt liegenden Wasserstoffgehalt aufweist.

12. Verfahren nach Anspruch 11, **dadurch gekennzeichnet, dass** der Schwellen-Wasserstoffgehalt im Bereich von 4 Vol.% bis 8 Vol.% liegt.

13. Verfahren nach einem der Ansprüche 7-12, **dadurch gekennzeichnet, dass** der nicht dem Anodenabgas (A) beigemischte Teil des Kathodenabgases (K) und das die wenigstens eine Katalysatoreinheit (34) nach Durchführung der katalytischen Reaktion verlassende Gemisch des Anodenabgases (A) und des dem Anodenabgas (A) beigemischten Teils des Kathodenabgases (K) in eine Brennstoffzellen-Abgasanlage (42) geleitet werden.
